# EUROPÄISCHE PATENTSCHRIFT

(11) **EP 0 862 248 B1**
(45) Veröffentlichungstag und Bekanntmachung des Hinweises auf die Patenterteilung: **10.04.2002**
(21) Anmeldenummer: 98101235.4
(22) Anmeldetag: 24.01.1998
(51) Int. Cl.: H01R 25/16, H02B 1/052, H02G 3/12

(54) **Vorrichtung zur Befestigung einer Anschlusseinheit in einem Kabelkanal**
Device for fixing a connection unit in a cable ducting
Dispositif pour fixation d'une unité de connexion dans une gaine de câbles

(30) Priorität: 28.02.1997 DE 29703641 U
(43) Veröffentlichungstag der Anmeldung: 02.09.1998
(73) Patentinhaber: BTR BLUMBERGER TELEFON- UND RELAISBAU ALBERT METZ, D-78176 Blumberg (DE)
(72) Erfinder: Jaag, Dieter, 78050 Villingen-Schwenningen (DE)
(74) Vertreter: Patentanwälte Westphal, Mussgnug & Partner

(56) Entgegenhaltungen:
- EP-A- 0 473 481
- DE-A- 3 112 347
- DE-A- 3 113 679
- DE-U- 9 313 599

## Beschreibung

Die Erfindung betrifft eine Vorrichtung zur Befestigung einer Anschlußeinheit in einem Kabelkanal gemäß dem Oberbegriff des Anspruchs 1.

Kabelkanäle werden unter anderem dazu verwendet, in Gebäuden Stromkabel und Daten- und Telekommunikationskabel zu verlegen. Anschlußeinheiten werden in den Kabelkanal eingesetzt, um an den jeweils gewünschten Stellen Endgeräte an die in den Kabelkanal verlegten Kabel anschließen zu können.

Um solche Anschlußeinheiten in dem Kabelkanal befestigen zu können, ist es bekannt, in den Kabelkanal Halter einzusetzen, die am Boden des Kabelkanals befestigt werden und von dem Boden abstehen. Die Halter sind als geschlossene Becher aus Kunststoff ausgebildet, in welche die Anschlußeinheit eingesetzt wird. Am oberen Rand der Becher wird die Anschlußeinheit befestigt, z. B. mittels eines Tragrings oder mittels Traglaschen angeschraubt. DE-A-31 12 347 offenbart eine Einbandose für eine Anschlusseinheit.

Um die in dem Kabelkanal verlegten Kabel zu der jeweiligen Anschlußeinheit zu führen, weisen die Becher Durchbrüche auf, durch welche das Kabel in den Becher hinein an die Anschlußeinheit geführt wird. Dies kann bei der Montage Schwierigkeiten bereiten, insbesondere wenn die Kabel eine größere Steifigkeit aufweisen und mit relativ kleinen Biegeradien durch die Durchbrüche in den becherförmigen Halter geführt werden müssen.

Der Erfindung liegt die Aufgabe zugrunde, eine Vorrichtung zur Befestigung einer Anschlußeinheit in einem Kabelkanal zu schaffen, die die Montage und das Anschließen der Anschlußeinheit erleichtert.

Diese Aufgabe wird erfindungsgemäß gelöst durch eine Vorrichtung mit den Merkmalen des Anspruchs 1.

Vorteilhafte Ausführungen und Weiterbildungen der Erfindung sind in den Unteransprüchen angegeben.

Der Grundgedanke der Erfindung besteht darin, den Halter als U-förmigen Bügel auszubilden, der so in dem Kabelkanal befestigt wird, daß seine Ebene in der Längsrichtung des Kabelkanals verläuft. Der Halter wird mit seinem Joch am Boden des Kabelkanals anliegend befestigt, so daß die zwei Schenkel des U-förmigen Halters vom Boden des Kabelkanals senkrecht abstehen. Die Anschlußeinheit kann zwischen die beiden Schenkel des Halters eingesetzt und an den freien Enden dieser Schenkel befestigt werden. Auf diese Weise ist die Anschlußeinheit von beiden Seiten frei zugänglich, so daß die in dem Kabelkanal verlegten Kabel in einfacher Weise an die Anschlußeinheit angeschlossen werden können. Die anzuschließenden Kabelenden können an die Anschlußeinheit angeklemmt werden, während diese sich noch außerhalb des Kabelkanals befinden. Dann wird die Anschlußeinheit in den Halter eingesetzt und befestigt, wobei die angeschlossenen Kabel frei in den Kabelkanal gelegt werden können und das Einsetzen der Anschlußeinheit in den Halter nicht behindern.

Vorzugsweise können in den Halter Becherhalbschalen eingesetzt werden, die an den Schenkeln des Halters befestigbar sind, vorzugsweise in Führungen dieser Schenkel eingeschoben werden. Die eingesetzten Becherhalbschalen decken die in den Halter eingesetzte Anschlußeinheit jeweils nach einer Seite ab. Mit Hilfe der eingesetzten Becherhalbschalen kann die Anschlußeinheit bei Bedarf gegen Kabel abgeschirmt werden, die in dem Kabelkanal an der Anschlußeinheit vorbeigeführt werden, ohne daß die Anschlußeinheit an diese Kabel angeschlossen wird. Die Becherhalbschalen können je nach Bedarf auf nur jeweils einer der beiden Seiten des Halters oder auch auf beiden Seiten eingesetzt werden.

Die Halter sind in Längsrichtung des Kabelkanals aneinanderreihbar, so daß mittels der Halter auch mehrere Anschlußeinheiten nebeneinander im vorgegebenen Rastermaß aneinander anschließend eingesetzt werden können.

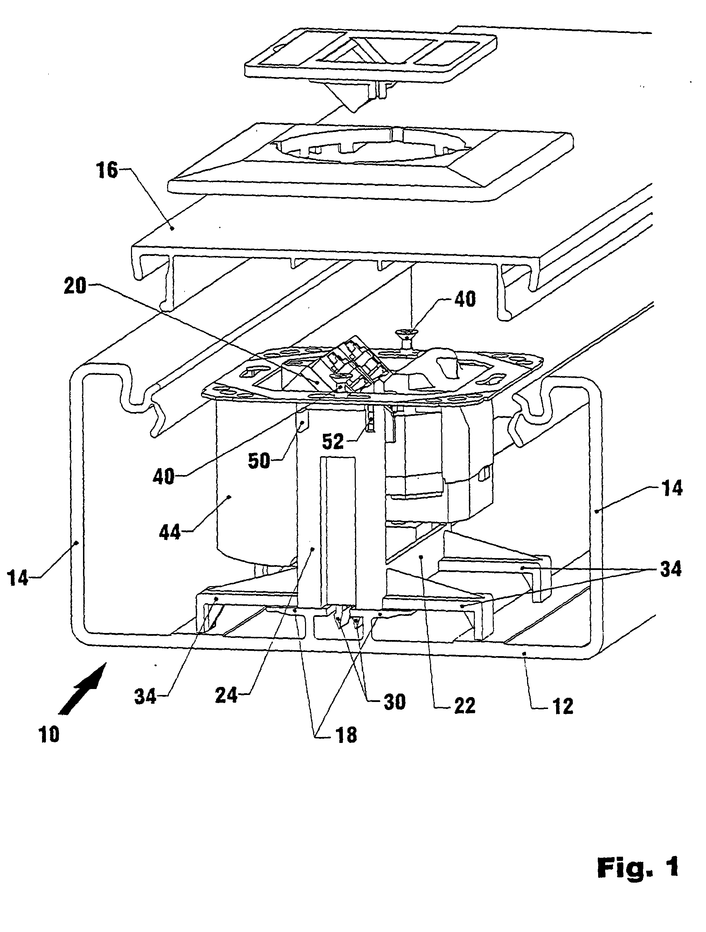

Im folgenden wird die Erfindung anhand eines in der Zeichnung dargestellten Ausführungsbeispiels näher erläutert. Es zeigen
- Figur 1: eine perspektivische Ansicht des Kabelkanals mit Halter und in den Halter eingesetzter Anschlußeinheit und

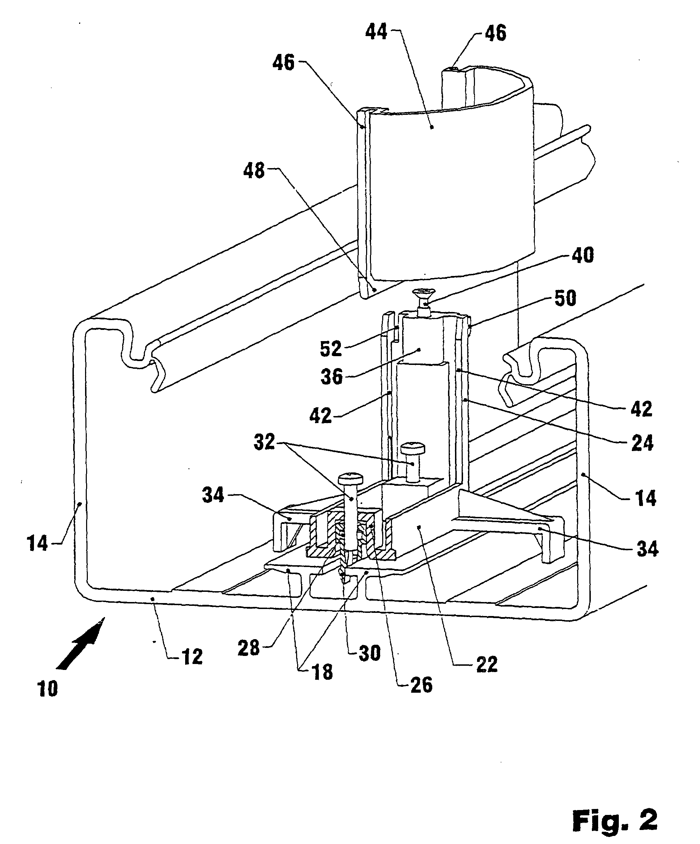

- Figur 2: eine entsprechende Ansicht mit teilweise weggebrochenem Halter ohne Anschlußeinheit.

Ein Kabelkanal 10 besteht aus einem U-förmigen Kunststoffprofil mit einem Boden 12 und seitlichen Profilschenkeln 14. Der Kabelkanal 10 wird durch eine auf die freien Enden der Profilschenkel 14 aufschnappbare Abdeckung 16 veschlossen. Auf der Innenseite des Bodens 12 ist eine in Längsrichtung des Kabelkanals 10 verlaufende Profilierung 18 angeformt, die eine beidseitig hinterschnittene Nut bildet.

An sich bekannte Anschlußeinheiten 20, z. B. Anschlußeinheiten eines in dem Kabelkanal 10 verlegten Datennetzes oder Telekommunikationsnetzes werden mittels eines nachfolgend beschriebenen Halters in dem Kabelkanal 10 befestigt.

Der Halter ist als vorzugsweise aus Kunststoff gespritzter U-förmiger Bügel ausgebildet. Der Halter weist ein Joch 22 auf, an dessen beiden Enden jeweils rechtwinklig zu dem Joch 22 abstehende Schenkel 24 angeformt sind. Beim Einsetzen des Halters in den Kabelkanal 10 sitzt das Joch 22 auf der Profilierung 18 auf und verläuft in Längsrichtung dieser Profilierung 18. An seinen beiden Enden weist das Joch 22 an seiner Unterseite jeweils eine Aufnahme 26 auf, die gegen die Profilierung 18 offen ist. In die Aufnahmen 26 ist jeweils eine Klemmeinrichtung 28 eingesetzt, die zwei auseinander spreizbare Rasthaken 30 aufweist. Wird das Joch 22 auf die Profilierung 18 aufgesetzt, so greifen die Rasthaken 30 in die hinterschnittene Nut der Profilierung 18. Von der Oberseite des Joches 22 führt jeweils eine Schraube 32 durch das Joch 22, greift in eine Gewindemutter der Klemmeinrichtung 28 und endet zwischen den Rasthaken 30. Die Schraube 32 hält die Klemmeinrichtung 28 unverlierbar an dem Halter. Wenn die Rasthaken 30 der Klemmeinrichtung 28 in die Nut der Profilierung 18 eingesetzt sind, wird die Schraube 32 eingedreht, wobei sich ihr freies Ende zwischen die Rasthaken 30 bewegt und diese auseinanderspreizt. Die Rasthaken 30 hintergreifen auf diese Weise die hinterschnittene Nut der Profilierung 18, wodurch das Joch 22 und damit der Halter an der Profilierung 18 und damit in dem Kabelkanal 10 festgeklemmt und fixiert sind.

An beiden Enden des Joches 22 sind weiter nach beiden Seiten rechtwinklig abstehende Auslegerarme 34 angeformt. Die Auslegerarme 34 verlaufen parallel zu dem Boden 12 des Kabelkanals 10 und stützen sich mit ihrem gegen den Boden 12 hin abgewinkelten Ende auf dem Boden 12 ab. Durch die Auslegerarme 34 wird der Halter unverkippbar in dem Kabelkanal 10 abgestützt.

An den oberen freien Enden der Schenkel 24 des Halters ist jeweils ein verstärkter Block 36 angeformt. Die Blöcke 36 werden jeweils von einer Bohrung durchsetzt, die parallel zu den Schenkeln 24 verläuft. Zur Befestigung der Anschlußeinheit 20 in dem Halter wird die Anschlußeinheit zwischen die Schenkel 24 eingesetzt und sitzt mit einem Tragering oder mit Tragelaschen auf den Blöcken 36 der Schenkel 24 auf. Der Tragering bzw. die Tragelaschen werden mittels Schrauben 40 befestigt, die in die Bohrungen eingedreht werden.

Die Schenkel 24 weisen an ihren beiden Außenrändern jeweils eine sich über die gesamte Länge der Schenkel 24 erstreckende am freien Ende der Schenkel 24 offene Führungsnut 42 auf. In die Führungsnuten 42 können bei Bedarf Becherhalbschalen 44 aus Kunststoff eingesetzt werden, falls die in den Halter eingesetzte Anschlußeinheit 20 nach einer der beiden Seiten oder nach beiden Seiten abgedeckt werden soll. Die Becherhalbschalen 44 weisen eine halbzylindrische Wand und einen geschlossenen Boden auf. Entlang des Längskanten der halbzylindrischen Wand sind jeweils Führungsschienen 46 angeformt, die beim Einsetzen der Becherhalbschalen 44 in den Halter in die Führungsnuten 42 der Schenkel 24 eingreifen. An der freien Kante des Bodens der Becherhalbschalen 44 ist weiter eine vorspringende Bodenschiene 48 angeformt, die in entsprechenden Aussparungen an der Oberseite des Joches 22 eingreift, um eine zusätzliche Verkippsicherung der Becherhalbschalen 44 in dem Halter zu bewirken.

Je nach Bedarf kann eine Becherhalbschale 44 auf der einen oder der anderen Seite des Halters oder auf beiden Seiten des Halters eingesetzt werden, bevor die Anschlußeinheit 20 eingesetzt wird. Sobald die Anschlußeinheit 20 eingesetzt ist und mit ihrem Tragering oder ihren Tragelaschen auf dem Block 36 aufsitzt und mittels der Schrauben 40 befestigt ist, versperrt der Tragring bzw. die Traglaschen das offene obere Ende der Führungsnuten 42, so daß die Becherhalbschalen 44 in den Führungsnuten 42 und damit an den Schenkeln 24 fixiert sind.

An den oberen freien Enden der Schenkel 24 ist jeweils ein nach außen abstehender Vorsprung 50 angeformt, der außermittig zur Längsmittelebene des Halters angeordnet ist. Bezüglich dieser Längsmittelebene spiegelsymmetrisch zu dem Vorsprung 50 und zu diesem korrespondierend ist in dem freien Ende der Schenkel 24 eine Aufnahme 52 ausgebildet. Werden mehrere Halter aneinander anschließend in den Kabelkanal 10 montiert, so liegen die Schenkel 24 der aneinander anschließenden Halter mit ihren Außenseiten aneinander an, wobei wechselweise jeweils die Vorsprünge 50 des einen Halters in die Aufnahmen 52 des anderen Halters eingreifen. Dadurch ist gewährleistet, daß sich die Schenkel 24 aneinander anschließender Halter nicht seitlich gegeneinander verschieben und die in die Halter eingesetzten Anschlußeinheiten 20 in exakter Rasteranordnung montiert werden.

## Patentansprüche

1. Vorrichtung zur Befestigung einer Anschlußeinheit (20) in einem Kabelkanal (10), mit einem Halter, der am Boden (12) des Kabelkanals und von diesem Boden abstehend befestigbar ist, der die Anschlußeinheit aufnimmt und an dessen vom Boden des Kabelkanals entfernten oberen Rand die Anschlußeinheit befestigbar ist, **dadurch gekennzeichnet, daß** der Halter als U-förmiger Bügel ausgebildet ist, der aus einem Joch (22) und zwei jeweils an den Enden des Joches (22) angeformten Schenkeln (24) besteht, wobei bei eingebautem Halter das Joch (22) in Längsrichtung des Kabelkanals (10) verläuft und an dessen Boden (12) angeordnet ist und wobei die Anschlußeinheit (20) an den freien Enden (36) der Schenkel (24) befestigbar ist.

2. Vorrichtung nach Anspruch 1, **dadurch gekennzeichnet, daß** das Joch (22) an einer in Längsrichtung des Kabelkanals (10) verlaufenden, am Boden (12) des Kabelkanals (10) ausgeformten Profilierung (18) klemmbar ist.

3. Vorrichtung nach Anspruch 2, **dadurch gekennzeichnet, daß** das Joch (22) zumindest zwei in Längsrichtung gegeneinander versetzte Klemmeinrichtungen (28) aufweist.

4. Vorrichtung nach Anspruch 3, **dadurch gekennzeichnet, daß** die Profilierung (18) eine beidseitig hinterschnittene Nut aufweist und daß die Klemmeinrichtung (28) mit auseinanderspreizbaren Rasthaken (30) in die hinterschnittene Nut eingreift.

5. Vorrichtung nach Anspruch 4, **dadurch gekennzeichnet, daß** die Klemmeinrichtungen (28) jeweils mittels einer Schraube (32) unverlierbar an dem Joch (22) befestigt sind und daß diese Schraube (32) zwischen die Rasthaken (30) eindrehbar ist, um diese auseinanderzuspreizen.

6. Vorrichtung nach einem der vorhergehenden Ansprüche, **dadurch gekennzeichnet, daß** an dem Joch (22) wenigstens zwei entgegengesetzt zueinander senkrecht von dem Joch (22) abstehende Auslegerarme (34) angeformt sind, die sich an dem Boden (12) des Kabelkanals (10) abstützen.

7. Vorrichtung nach einem der vorhergehenden Ansprüche, **dadurch gekennzeichnet, daß** an beiden Seiten des Halters jeweils Becherhalbschalen (44) lösbar an den Schenkeln (24) befestigbar sind.

8. Vorrichtung nach Anspruch 7, **dadurch gekennzeichnet, daß** an den Schenkeln (24) in deren Längsrichtung verlaufende Führungen (42) ausgebildet sind, in welche die Becherhalbschalen (44) mit korrespondierenden Führungsteilen (46) einschiebbar sind.

9. Vorrichtung nach Anspruch 8, **dadurch gekennzeichnet, daß** die in die Führungen (42) eingeschobenen Becherhalbschalen (44) durch die befestigte Anschlußeinheit (20) gehalten werden.

10. Vorrichtung nach einem der vorhergehenden Ansprüche, daß an der Außenseite der Schenkel (24) zueinander korrespondierende Vorsprünge (50) und Aufnahmen (52) ausgebildet sind, mit welchen aneinander anschließend in dem Kabelkanal (10) angeordnete Halter miteinander in Eingriff kommen.

## Claims

1. A device for securing a connection unit (20) in a cable duct (10), having a holder, which may be attached to the bottom (12) of the cable duct so as to protrude therefrom, which accommodates the connection unit and to the upper edge of which, remote from the bottom of the cable duct, the connection unit may be attached, **characterised in that** the holder takes the form of a U-shaped clip consisting of a yoke (22) and two branches (24) formed in each case on the ends of the yoke (22), the yoke (22) extending, when the holder is installed, in the longitudinal direction of the cable duct (10) and being arranged on the bottom (12) thereof and the connection unit (20) being capable of attachment to the free ends (36) of the branches (24).

2. A device according to claim 1, **characterised in that** the yoke (22) may be clamped to profiling (18) extending in the longitudinal direction of the cable duct (10) and formed on the bottom (12) of the cable duct (10).

3. A device according to claim 2, **characterised in that** the yoke (22) comprises at least two clamping means (28) staggered relative to one another in the longitudinal direction.

4. A device according to claim 3, **characterised in that** the profiling (18) comprises a channel undercut on both sides and **in that** the clamping means (28) engages with spreadable snap-in hooks (30) in the undercut channel.

5. A device according to claim 4, **characterised in that** the clamping means (28) are attached to the yoke (22) in each case captively by means of a screw (32) and **in that** said screw (32) may be screwed in between the snap-in hooks (30), in order to spread them apart.

6. A device according to one of the preceding claims, **characterised in that** at least two brackets (34) protruding in opposite directions perpendicularly from the yoke (22) are formed on the yoke (22) and rest on the bottom (12) of the cable duct (10).

7. A device according to one of the preceding claims, **characterised in that** half-cups (44) may be attached detachably to the branches (24) on each side of the holder.

8. A device according to claim 7, **characterised in that** guides (42) are constructed on the branches (24), which guides (42) extend in the longitudinal direction thereof and into which the half-cups (44) may be inserted with corresponding guide members (46).

9. A device according to claim 8, **characterised in that** the half-cups (44) inserted into the guides (42) are held by the attached connection unit (20).

10. A device according to one of the preceding claims, **characterised in that** mutually corresponding projections (50) and receptacles (52) are constructed on the outside of the branches (24), with which projections (50) and receptacles (52) holders arranged adjacent one another in the cable duct (10) come into engagement with one another.

## Revendications

1. Dispositif de fixation d'une unité de raccordement (20) dans un canal de câbles (10) au moyen d'un support qui peut être fixé en saillie sur le fond (12) du canal de câbles et qui accueille l'unité de raccordement, celle-ci pouvant être fixée au bord supérieur du support éloigné du fond du canal,
**caractérisé en que**
le support est une pièce recourbée en forme d'U constituée d'un longeron (22) portant à ses deux extrémités des branches (24), ce longeron (22), quand le support est monté, étant selon la direction longitudinale du canal de câbles (10), disposé sur son fond (12), et l'unité de raccordement (20) pouvant être fixée aux extrémités libres (36) des branches (24).

2. Dispositif selon la revendication,
**caractérisé en ce que**
le longeron (22) peut être fixé par coincement sur un profilage (18) roulé sur le fond (12) du canal de câble (10) et disposé selon la direction longitudinale de ce canal (10).

3. Dispositif selon la revendication 2,
**caractérisé en ce que**
le longeron (22) présente au moins deux dispositifs de coincement (28) décalés l'un par rapport à l'autre en direction longitudinale.

4. Dispositif selon la revendication 3,
**caractérisé en ce que**
le profilage (18) présente, de chaque côté, une rainure en contre dépouille dans laquelle est en prise le dispositif de coincement (28) par l'intermédiaire de crochets d'arrêt (30) pouvant être écartés l'un de l'autre.

5. Dispositif selon la revendication 4,
**caractérisé en ce que**
les dispositifs de coincement (28) sont fixés chacun de manière imperdable, au longeron (22) par une vis (32) qui peut être vissée entre les crochets d'arrêt (30) de manière à les écarter l'un de l'autre.

6. Dispositif selon l'une des revendications précédentes,
**caractérisé en ce que**
sur le longeron (22) sont moulés au moins deux bras (34) opposés, en saillie perpendiculairement au longeron et s'appuyant sur le fond (12) du canal de câbles (10).

7. Dispositif selon l'une des revendications précédentes,
**caractérisé en ce que**
de chaque côté du support une demi-coquille de boîtier (44). peut être fixée sur les branches (24). de manière amovible.

8. Dispositif selon la revendication 7.
**caractérisé en ce que**
sur les branches (24) et selon la direction longitudinale de celles-ci, se trouvent des guidages (42) dans lesquels peuvent être introduites par coulissement les demi-coquilles de boîtier (44) présentant des parties de guidage (46) correspondantes.

9. Dispositif selon la revendication 8,
**caractérisé en ce que**
les demi-coquilles de boîtier (44) engagées dans les guidages (42) sont maintenues par l'unité de raccordement (20) fixée.

10. Dispositif selon l'une des revendications précédentes.
**caractérisé en ce que**
sur la face externe des branches (24) se trouvent des saillies (50) et des logements (52) se correspondant, avec lesquels viennent en prise le canal de câbles (10).
